# EUROPÄISCHE PATENTANMELDUNG

(11) **EP 4 075 367 A1**
(43) Veröffentlichungstag der Anmeldung: **19.10.2022**
(21) Anmeldenummer: 21214221.0
(22) Anmeldetag: 14.12.2021
(51) Int. Cl.: G06Q 30/06

(54) **COMPUTERSYSTEM ZUR VERBINDUNG MIT EINER LANDWIRTSCHAFTLICHEN ARBEITSMASCHINE**

(30) Priorität: 16.04.2021 DE 102021109646
(71) Anmelder: CLAAS E-Systems GmbH, 49201 Dissen (DE)
(72) Erfinder: Walther, Steffen, 49205 Hasbergen (DE); Johann to Büren, Gerald, 49205 Hasbergen (DE); Mähler, Reinhold, 49214 Bad Rothenfelde (DE); von Wendorff, Wolf, 33829 Borgholzhausen (DE); Haack, Lennart, 33775 Versmold (DE); Osterkamp, Matthias, 49088 Osnabrück (DE); Heseker, Niklas, 33100 Neuenbeken (DE); Kremel, Elli, 49326 Melle (DE); Wilske, Anja, 33442 Herzebrock-Clarholz (DE); Boisson, Xavier, 78910 Boissets (FR)
(74) Vertreter: CLAAS Gruppe

(57) **Zusammenfassung**

Die Erfindung betrifft ein Computersystem zur Verbindung mit einer landwirtschaftlichen Arbeitsmaschine (1), wobei die landwirtschaftliche Arbeitsmaschine (1) eine lokale Bedieneinrichtung (5), insbesondere einen Terminal, aufweisend eine Eingabeeinrichtung (6) und eine Ausgabeeinrichtung (7), zur Steuerung der landwirtschaftlichen Arbeitsmaschine (1) und eine lokale Recheneinrichtung (8) zur Steuerung der lokalen Bedieneinrichtung (5) aufweist, wobei das Computersystem (4) ein Serversystem (9) aufweist, wobei das Serversystem (9) mit der lokalen Recheneinrichtung (8) kommuniziert. Es wird vorgeschlagen, dass das Computersystem (4) einen benutzerspezifischen Online-Shop (11) mit einem die landwirtschaftliche Arbeitsmaschine (1) betreffenden Produktangebot (12) verwaltet, dass ein Benutzer (B) der landwirtschaftlichen Arbeitsmaschine (1) über die lokale Bedieneinrichtung (5) auf den Online-Shop (11) zugreifen kann und dass das Computersystem (4) dem Benutzer (B) über die lokale Bedieneinrichtung (5) eine von dem Computersystem (4) vorausgewählte Teilmenge (13) des Produktangebots (12) anzeigt.

## Beschreibung

Die vorliegende Erfindung betrifft ein Computersystem zur Verbindung mit einer landwirtschaftlichen Arbeitsmaschine gemäß dem Oberbegriff von Anspruch 1 sowie eine landwirtschaftliche Arbeitsmaschine gemäß Anspruch 5.

Der bekannte Stand der Technik, von dem die Erfindung ausgeht, betrifft ein handelsübliches Computersystem zur Verbindung mit einer landwirtschaftlichen Arbeitsmaschine gemäß dem Oberbegriff von Anspruch 1. Die Verbindung von Computersystemen mit landwirtschaftlichen Arbeitsmaschinen ist für diverse Funktionen, beispielsweise zur Navigation oder zur Bereitstellung von Wetterdaten, bekannt.

Aus der US 8,423,419 B2 ist bekannt, wie eine Liste von Ersatzteilen in Abhängigkeit von einer Konfiguration einer Arbeitsmaschine, speziell einem zu tauschenden Maschinenbauteil, generiert werden kann. So wird bei einer Wartung oder Reparatur die Standzeit der Arbeitsmaschine verkürzt.

Bei der in Rede stehenden landwirtschaftlichen Arbeitsmaschine kann es sich um jedwede landwirtschaftliche Arbeitsmaschine handeln, die der Abarbeitung eines landwirtschaftlichen Arbeitsprozesses, beispielsweise einem Bodenbearbeitungs- oder Ernteprozess, dient. Dazu gehören beispielsweise Zugmaschinen, insbesondere Traktoren, aber auch selbstfahrende Erntemaschinen wie Mähdrescher, Feldhäcksler oder dergleichen.

Derartige landwirtschaftliche Arbeitsmaschinen weisen inzwischen üblicherweise einen Terminal als wesentlichen Bestandteil für die Bedienung von landwirtschaftlichen Arbeitsmaschinen und Anbaugeräten, sowie Kombinationen aus landwirtschaftlichen Arbeitsmaschinen und Anbaugeräten und für die Dokumentation umgesetzter Arbeitsprozesse auf.

Eine landwirtschaftliche Arbeitsmaschine weist einen Funktionsumfang, festgelegt durch ihre aktuelle Konfiguration, auf. Diese Konfiguration umfasst diverse Aktoren sowie Lizenzen. Wenn eine Online-Konnektivität ausreichend gegeben ist, kann ein Datenaustausch zwischen Terminal und einem Serversystem erfolgen. Dies wird gegenwärtig vornehmlich für Software-Updates sowie die Online-Dokumentation genutzt. Das Verändern der aktuellen Konfiguration durch das Zukaufen von Lizenzen, Bauteilen und dergleichen ist aktuell ein aufwändiger, fehleranfälliger Prozess.

Der Erfindung liegt das Problem zugrunde, das bekannte Computersystem derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass über eine lokale Bedieneinrichtung der landwirtschaftlichen Arbeitsmaschine das Computersystem direkt genutzt werden kann. Das Computersystem kann entsprechend so ausgestaltet werden, dass es bei dieser Interaktion benutzerspezifische Aspekte wie die aktuelle Konfiguration der landwirtschaftlichen Arbeitsmaschine berücksichtigt und darauf basierend Vorschläge für eine relevante Teilmenge eines Produktangebots ermittelt. Der Benutzer kann dann direkt an der landwirtschaftlichen Arbeitsmaschine relevante Produkte erwerben.

Im Einzelnen wird vorgeschlagen, dass das Computersystem einen benutzerspezifischen Online-Shop mit einem die landwirtschaftliche Arbeitsmaschine betreffenden Produktangebot verwaltet, dass ein Benutzer der landwirtschaftlichen Arbeitsmaschine über die lokale Bedieneinrichtung auf den Online-Shop zugreifen kann und dass das Computersystem dem Benutzer über die lokale Bedieneinrichtung eine von dem Computersystem vorausgewählte Teilmenge des Produktangebots anzeigt.

Darüber hinaus wird das obige Problem durch die Merkmale von Anspruch 5 gelöst.

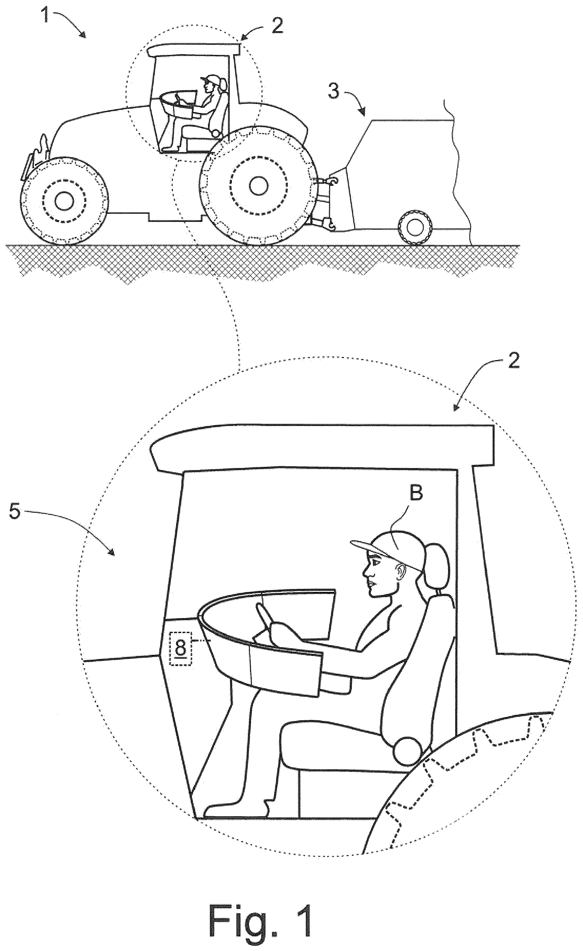

Im Folgenden wird die Erfindung anhand einer lediglich Ausführungsbeispiele darstellenden Zeichnung näher erläutert. In der Zeichnung zeigt
- Fig. 1: eine schematische Seitenansicht einer landwirtschaftlichen Arbeitsmaschine und
- Fig. 2: eine schematische Ansicht einer lokalen Bedieneinrichtung im Zusammenspiel mit einem vorschlagsgemäßen Computersystem.

Die Zeichnung zeigt eine landwirtschaftliche Arbeitsmaschine 1 zur Durchführung eines landwirtschaftlichen Arbeitsprozesses mit einer Fahrerkabine 2.

Landwirtschaftliche Arbeitsmaschinen 1 weisen häufig ein oder mehrere Arbeitsaggregate 3 zur Durchführung oder Unterstützung des landwirtschaftlichen Arbeitsprozesses auf. Bei einer Erntemaschine zählen dazu beispielsweise die Einzugseinrichtung, das Dresch- oder Häckselwerk, die Überladeeinrichtung, aber auch der Fahrantrieb und die Lenkeinrichtung. Eine landwirtschaftliche Arbeitsmaschine kann auch mit Arbeitsorganen in Form von Anbaugeräten, die an das Trägerfahrzeug angebaut sind, ausgestattet sein. Bei einer Erntemaschine zählen dazu beispielsweise Vorsatzgeräte wie Schneid- oder Mähwerke, Maisgebisse oder dergleichen. Bei einer Zugmaschine kann als Anbaugerät beispielsweise ein Mähwerk, ein Wender, ein Schwader, eine Ballenpresse oder ein Bodenbearbeitungsgerät wie ein Pflug, ein Grubber, eine Egge oder dergleichen vorgesehen sein.

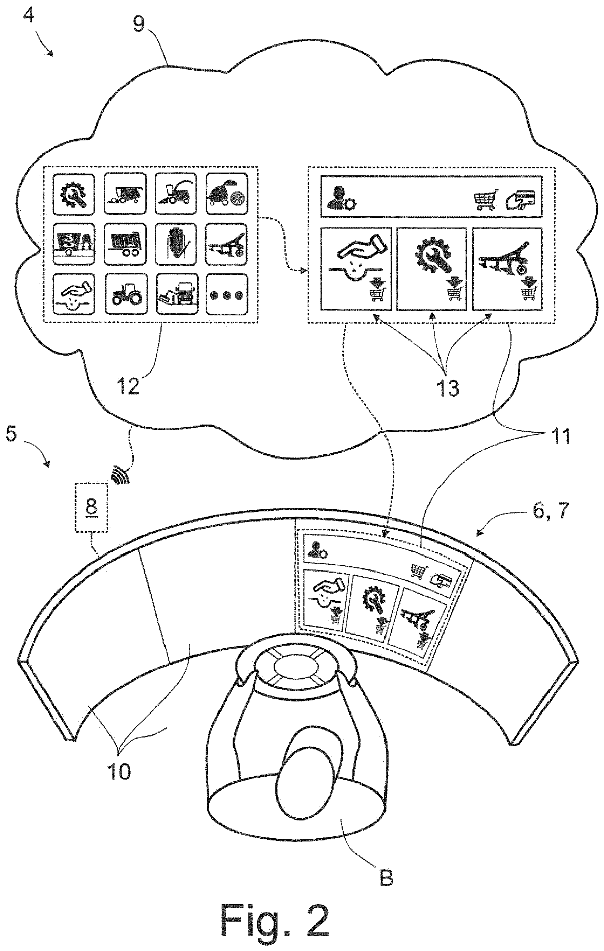

Das in den Figuren dargestellte und insoweit bevorzugte Ausführungsbeispiel betrifft ein Computersystem 4 zur Verbindung mit einer landwirtschaftlichen Arbeitsmaschine 1, wobei die landwirtschaftliche Arbeitsmaschine 1 eine lokale Bedieneinrichtung 5, insbesondere einen Terminal, aufweisend eine Eingabeeinrichtung 6 und eine Ausgabeeinrichtung 7, zur Steuerung der landwirtschaftlichen Arbeitsmaschine 1 und eine lokale Recheneinrichtung 8 zur Steuerung der lokalen Bedieneinrichtung 5 aufweist, wobei das Computersystem 4 ein Serversystem 9 aufweist, wobei das Serversystem 9 mit der lokalen Recheneinrichtung 8 kommuniziert. Das Serversystem 9 ist in Fig. 2 als Cloud dargestellt.

Die lokale Bedieneinrichtung 5 kann auch der Erfassung von Daten über diverse Schnittstellen, z.B. Arbeitszeiten und Ausbringmengen dienen. Statt oder zusätzlich zu einem Terminal kann die lokale Bedieneinrichtung 5 auch ein Smartphone aufweisen oder durch dieses gebildet werden. Die Ausgabeeinrichtung 7 kann wie in den Figuren dargestellt ein oder mehrere Bildschirme 10 aufweisen. Insbesondere können die Eingabeeinrichtung 6 und die Ausgabeeinrichtung 7 gemeinsam durch einen Touchscreen gebildet werden.

Die lokale Bedieneinrichtung 5 steuert die landwirtschaftliche Arbeitsmaschine 1 zumindest teilweise. Dies betrifft hier und vorzugsweise die Einstellung von Maschinenparametern und dergleichen. Die lokale Bedieneinrichtung 5 ist vorzugsweise mit der landwirtschaftlichen Arbeitsmaschine 1 kabelgebunden oder kabellos verbunden, und ist weiter vorzugsweise Teil der landwirtschaftlichen Arbeitsmaschine 1.

Die Kommunikation zwischen dem Serversystem 9 und der Recheneinrichtung 8 findet hier und vorzugsweise über das Internet statt.

Wesentlich ist nun, dass das Computersystem 4 einen benutzerspezifischen Online-Shop 11 mit einem die landwirtschaftliche Arbeitsmaschine 1 betreffenden Produktangebot 12 verwaltet, dass ein Benutzer B der landwirtschaftlichen Arbeitsmaschine 1 über die lokale Bedieneinrichtung 5 auf den Online-Shop 11 zugreifen kann und dass das Computersystem 4 dem Benutzer B über die lokale Bedieneinrichtung 5 eine von dem Computersystem 4 vorausgewählte Teilmenge 13 des Produktangebots 12 anzeigt.

Die lokale Bedieneinrichtung 5, insbesondere die Recheneinrichtung 8, ist hier und vorzugsweise dem Computersystem 4 zugeordnet und bildet einen Teil des Computersystems 4. Die beschriebenen, durch das Computersystem 4 ausgeführten Funktionen können dann teilweise durch die lokale Bedieneinrichtung 5, insbesondere die Recheneinrichtung 8, ausgeführt werden. Genauso kann jedoch vorgesehen sein, dass die lokale Bedieneinrichtung 4 konzeptionell eigenständig ist und die Funktionen des Computersystems 4 durch das Serversystem 9 ausgeführt werden. Die vorschlagsgemäße Lehre betrifft somit einerseits nur ein Computersystem 4, das mit der lokalen Bedieneinrichtung 5 kommuniziert, diese jedoch nicht umfasst und andererseits auch die Möglichkeit, einen Teil der Funktionen des Computersystems 4 lokal auszuführen, wodurch die lokale Bedieneinrichtung 5 Teil des Computersystems 4 ist. Dies bildet insofern die softwaretechnische Realität ab, in der der tatsächliche Ausführungsort einer Software meist untergeordnete Relevanz aufweist. Das Computersystem 4 umfasst Software und Hardware.

Bei dem in den Figuren dargestellten und insoweit bevorzugten Ausführungsbeispiel ist ferner vorgesehen, dass das Computersystem 4 eine aktuelle Konfiguration der landwirtschaftlichen Arbeitsmaschine 1 erkennt und/oder dass die aktuelle Konfiguration der landwirtschaftlichen Arbeitsmaschine 1 in dem Computersystem 4 hinterlegt ist, dass das Computersystem 4 die Teilmenge 13 des Produktangebots 12 basierend auf der aktuellen Konfiguration der landwirtschaftlichen Arbeitsmaschine 1 vorauswählt, vorzugsweise, dass die Teilmenge 13 des Produktangebots 12 zu mindestens 50%, vorzugsweise zu mindestens 75%, weiter vorzugsweise zu mindestens 90%, noch weiter vorzugsweise nur, Produkte umfasst, die die landwirtschaftliche Arbeitsmaschine 1 betreffen und/oder die mit der aktuellen Konfiguration der landwirtschaftlichen Arbeitsmaschine 1 kompatibel sind.

Durch den Bezug zur aktuellen Konfiguration der landwirtschaftlichen Arbeitsmaschine 1 wird es möglich, dem Benutzer B Lizenzen, Bauteile und dergleichen anzubieten, die mit der landwirtschaftlichen Arbeitsmaschine 1 kompatibel sind und diese ergänzen. Durch die Möglichkeit der Bestellung direkt über die lokale Bedieneinrichtung können Daten während des Bestellvorgangs vorbelegt und/oder automatisch zugeordnet und Fehler vermieden werden. So ergibt sich für den Benutzer B eine Effizienzsteigerung.

Weiter ist hier und vorzugsweise vorgesehen, dass das Computersystem 4 die Teilmenge 13 des Produktangebots 12 basierend auf einem Nutzungsprofil, umfassend insbesondere aktuell oder in der Vergangenheit durchgeführte oder geplante Arbeitsprozesse und/oder Arbeitsprozessschritte, vorauswählt, vorzugsweise, dass das Computersystem 4 basierend auf dem Nutzungsprofil Produkte ermittelt, die zu einer Effizienzsteigerung und/oder einer Kostenersparnis und/oder einer Leistungssteigerung und/oder einer Vermeidung von Standzeiten für die landwirtschaftliche Arbeitsmaschine 1 führen und die ermittelten Produkte dem Benutzer B als Teil der Teilmenge 13 anzeigt.

Die Produkte des Produktangebots 12 und speziell die ermittelten Produkte können Bauteile und/oder freizuschaltende Funktionen für die landwirtschaftliche Arbeitsmaschine 1 und/oder Services, beispielsweise Werkstatttermine oder digitale Services, und/oder Verschleißteile und/oder Ersatzteile und/oder Verbrauchsstoffe und/oder Betriebsmittel umfassen. Diese werden hier und vorzugsweise maschinenspezifisch und/oder arbeitsprozessspezifisch vorausgewählt. Es kann sich dabei um ursprünglich nicht gekaufte Bauteile, Funktionen oder dergleichen und/oder um neu verfügbare Bauteile, Funktionen oder dergleichen handeln.

Der Arbeitsprozess kann beispielsweise eine Feldbearbeitung wie ein Pflügen oder ein Sprühvorgang sein.

Die Kostenersparnis oder Effizienzsteigerung sind insbesondere auf eine nächste Durchführung des gleichen Arbeitsvorgangs bezogen.

Darüber hinaus ist hier und vorzugsweise vorgesehen, dass der Benutzer B über die lokale Bedieneinrichtung 5 Produkte der Teilmenge 13 erwerben kann, vorzugsweise, dass die Produkte Lizenzen umfassen, die von dem Computersystem 4 als Reaktion auf den Erwerb für die landwirtschaftliche Arbeitsmaschine 1 temporär oder permanent freigeschaltet werden und die die Konfiguration der landwirtschaftlichen Arbeitsmaschine 1 verändern.

Hier und vorzugsweise erstellt das Computersystem 4 automatische eine Abrechnung eines vom Benutzer B erworbenen Produkts. Es kann vorgesehen sein, dass ein Erwerb des Produkts einen zu der landwirtschaftlichen Arbeitsmaschine 1 externen Prüfschritt, beispielsweise auf einem Hofrechner und/oder durch einen anderen Benutzer, umfasst.

Es kann zusätzlich zur Nutzung der lokalen Bedieneinrichtung 5 vorgesehen sein, dass das Computersystem 4 mit einem Smartphone und/oder einem Computer kommuniziert und dem Bediener B die Teilmenge 13 des Produktangebots 12 über das Smartphone und/oder den Computer anzeigt und der Benutzer B über das Smartphone und/oder den Computer Produkte der Teilmenge 13 erwerben, die vorzugsweise von dem Computersystem 4 als Reaktion auf den Erwerb für die landwirtschaftliche Arbeitsmaschine 1 temporär oder permanent freigeschaltet werden und die die Konfiguration der landwirtschaftlichen Arbeitsmaschine 1 verändern. Der gleiche benutzerspezifische Online-Shop 11 kann somit zusätzlich auch extern zu der landwirtschaftlichen Arbeitsmaschine 1 zugänglich sein.

Beansprucht wird außerdem gemäß einer weiteren Lehre, der eigenständige Bedeutung zukommt, eine landwirtschaftliche Arbeitsmaschine 1 mit einer lokalen Bedieneinrichtung 5 zur Verwendung mit oder als Teil eines vorschlagsgemäßen Computersystems 4. Es darf insoweit auf die Ausführungen zu der ersten Lehre verwiesen werden.

### Bezugszeichenliste

- 1: landwirtschaftliche Arbeitsmaschine
- 2: Fahrerkabine
- 3: Arbeitsaggregat
- 4: Computersystem
- 5: lokale Bedieneinrichtung
- 6: Eingabeeinrichtung
- 7: Ausgabeeinrichtung
- 8: lokale Recheneinrichtung
- 9: Serversystem
- 10: Bildschirm
- 11: benutzerspezifischer Online-Shop
- 12: Produktangebot
- 13: Teilmenge des Produktangebots
- B: Benutzer

## Patentansprüche

1. Computersystem zur Verbindung mit einer landwirtschaftlichen Arbeitsmaschine (1), wobei die landwirtschaftliche Arbeitsmaschine (1) eine lokale Bedieneinrichtung (5), insbesondere einen Terminal, aufweisend eine Eingabeeinrichtung (6) und eine Ausgabeeinrichtung (7), zur Steuerung der landwirtschaftlichen Arbeitsmaschine (1) und eine lokale Recheneinrichtung (8) zur Steuerung der lokalen Bedieneinrichtung (5) aufweist, wobei das Computersystem (4) ein Serversystem (9) aufweist, wobei das Serversystem (9) mit der lokalen Recheneinrichtung (8) kommuniziert,
**dadurch gekennzeichnet,**
**dass** das Computersystem (4) einen benutzerspezifischen Online-Shop (11) mit einem die landwirtschaftliche Arbeitsmaschine (1) betreffenden Produktangebot (12) verwaltet, dass ein Benutzer (B) der landwirtschaftlichen Arbeitsmaschine (1) über die lokale Bedieneinrichtung (5) auf den Online-Shop (11) zugreifen kann und dass das Computersystem (4) dem Benutzer (B) über die lokale Bedieneinrichtung (5) eine von dem Computersystem (4) vorausgewählte Teilmenge (13) des Produktangebots (12) anzeigt.

2. Computersystem nach Anspruch 1, **dadurch gekennzeichnet, dass** das Computersystem (4) eine aktuelle Konfiguration der landwirtschaftlichen Arbeitsmaschine (1) erkennt und/oder dass die aktuelle Konfiguration der landwirtschaftlichen Arbeitsmaschine (1) in dem Computersystem (4) hinterlegt ist, dass das Computersystem (4) die Teilmenge (13) des Produktangebots (12) basierend auf der aktuellen Konfiguration der landwirtschaftlichen Arbeitsmaschine (1) vorauswählt, vorzugsweise, dass die Teilmenge (13) des Produktangebots (12) zu mindestens 50%, vorzugsweise zu mindestens 75%, weiter vorzugsweise zu mindestens 90%, noch weiter vorzugsweise nur, Produkte umfasst, die die landwirtschaftliche Arbeitsmaschine (1) betreffen und/oder die mit der aktuellen Konfiguration der landwirtschaftlichen Arbeitsmaschine (1) kompatibel sind.

3. Computersystem nach Anspruch 1 oder 2, **dadurch gekennzeichnet, dass** das Computersystem (4) die Teilmenge (13) des Produktangebots (12) basierend auf einem Nutzungsprofil, umfassend insbesondere aktuell oder in der Vergangenheit durchgeführte oder geplante Arbeitsprozesse und/oder Arbeitsprozessschritte, vorauswählt, vorzugsweise, dass das Computersystem (4) basierend auf dem Nutzungsprofil Produkte ermittelt, die zu einer Effizienzsteigerung und/oder einer Kostenersparnis und/oder einer Leistungssteigerung und/oder einer Vermeidung von Standzeiten für die landwirtschaftliche Arbeitsmaschine (1) führen und die ermittelten Produkte dem Benutzer (B) als Teil der Teilmenge (13) anzeigt.

4. Computersystem nach einem der vorhergehenden Ansprüche, **dadurch gekennzeichnet, dass** der Benutzer (B) über die lokale Bedieneinrichtung (5) Produkte der Teilmenge (13) erwerben kann, vorzugsweise, dass die Produkte Lizenzen umfassen, die von dem Computersystem (4) als Reaktion auf den Erwerb für die landwirtschaftliche Arbeitsmaschine (1) temporär oder permanent freigeschaltet werden und die die Konfiguration der landwirtschaftlichen Arbeitsmaschine (1) verändern.

5. Landwirtschaftliche Arbeitsmaschine mit einer lokalen Bedieneinrichtung (5) zur Verwendung mit oder als Teil eines Computersystems (4) nach einem der vorhergehenden Ansprüche.
